# EUROPÄISCHE PATENTSCHRIFT

(11) **EP 3 558 608 B1**
(45) Veröffentlichungstag und Bekanntmachung des Hinweises auf die Patenterteilung: **13.01.2021**
(21) Anmeldenummer: 16826308.5
(22) Anmeldetag: 20.12.2016
(51) Int. Cl.: B27C 9/04, B27M 1/08, B23Q 39/02

(54) **VORRICHTUNG ZUM BEARBEITEN VON STANGENFÖRMIGEN WERKSTÜCKEN WIE FENSTERPROFILE ODER TÜRPROFILE**
DEVICE FOR MACHINING ROD-SHAPED WORKPIECES SUCH AS WINDOW PROFILES OR DOOR PROFILES
DISPOSITIF D'USINAGE DE PIÈCES EN FORME DE BARRE, PAR EXEMPLE DE PROFILÉS DE FENÊTRE OU DE PROFILÉS DE PORTE

(43) Veröffentlichungstag der Anmeldung: 30.10.2019
(73) Patentinhaber: Schirmer Maschinen GmbH, 33415 Verl (DE)
(72) Erfinder: HEEKE, Andreas, 33415 Verl (DE)
(74) Vertreter: Pellengahr, Maximilian Rudolf
(86) Internationale Anmeldenummer: PCT/EP2016/081876
(87) Internationale Veröffentlichungsnummer: WO 2018/113915

(56) Entgegenhaltungen:
- EP-A2- 1 944 143
- WO-A1-02/36302
- JP-A- H0 724 677
- US-A- 4 589 174

## Beschreibung

### Technisches Gebiet

Die Erfindung betrifft eine Vorrichtung zum Bearbeiten von stangenförmigen Werkstücken gemäß dem Oberbegriff des Anspruchs 1. Eine solche Vorrichtung ist aus der WO 02/36302 A1 bekannt.

### Stand der Technik

Bei der Bearbeitung von Profilen, die zur Herstellung von Türen oder Fenstern verwendet werden, sind zahlreiche unterschiedliche Arbeitsvorgänge durchzuführen. Solche Profile können aus Kunststoff, Metall oder Holz bestehen. Auch eine Kombination verschiedener Materialien ist möglich. Wenn z. B. Kunststoffhohlprofile für Fenster bearbeitet werden, müssen Entwässerungsschlitze schräg in den Falz und/oder nach unten und/oder nach vorne gefräst werden. Außerdem sind Schließteilpositionsbohrungen an einem Blendrahmenprofil und/oder an einem Kämpferprofil zu setzen.

Weiterhin müssen ggf. Schlosskästen ausgefräst werden. Mittelschrauben für Rollladenführungsleisten und Wetterschenkel müssen ebenfalls verbaut werden. Ferner sind im Flügellagerüberschlag Eckbandbohrungen vorzusehen. Durchmesser für Entwässerungs- und Belüftungsschlitze sind hier größer, während die Schließteilbohrungen sowie die Eckbandbohrungen meistens einen kleineren Durchmesser aufweisen. Um diese unterschiedlichen Bohrungen und Ausfräsungen durchführen zu können, sind verschiedene Bearbeitungswerkzeuge, wie Bohrer oder Fräser in unterschiedlichen Größen erforderlich.

Bei einer automatisierten Bearbeitung entfällt die Möglichkeit, z. B. bei einem einzigen Bohrer den Bohreinsatz auszuwechseln, weil der Aufwand hierfür zu groß wäre. Einfacher ist es, von vornherein Bohrer mit jeweils unterschiedlichen Einsätzen oder unterschiedliche Bohr- und Fräswerkzeuge vorzusehen. Um diesem Bearbeitungsaufwand gerecht zu werden und hier möglichst eine automatisierte Bearbeitung bereitzustellen, ist aus der DE 197 25 043 A1 eine Vorrichtung zum Bearbeiten von Bauelementen bekannt. Die bekannte Vorrichtung verfügt hierbei über eine im Wesentlichen senkrecht angeordnete Ebene zur Bewegungsrichtung der Bauelemente verlaufene Bearbeitungseinrichtung mit ihren Bearbeitungsgeräten, die in Bezug zum Werkstück räumlich ausgerichtet sind. Die Bearbeitungswerkzeuge befinden sich hierbei auf einem Trägerelement, sodass die auf dem Trägerelement vorgesehenen Bearbeitungswerkzeuge entsprechend durch Verfahren des jochartigen Trägerelementes zu den in der Transportrichtung vorgesehenen Werkstücken in Bearbeitung gelangen.

Auch sind Vollringe als Bearbeitungselemente bekannt, auf denen dann auf dem kreisförmigen Umfang entsprechend die Werkzeuge angeordnet sind. Durch Verfahren des zu bearbeitenden Werkstücks durch den Ring werden entsprechend die Werkzeuge am Ring gedreht, dass das entsprechende Werkzeug am Profil hier in Bearbeitung kommt.

Bei dieser bekannten Ausführungsform wird es als nachteilig angesehen, dass die an dem Trägerelement vorgesehenen Bearbeitungswerkzeuge, was die flexible Bearbeitung betrifft, diese hinsichtlich der Bearbeitungsgeschwindigkeit am Werkstück noch wesentlich verbesserungswürdig sind. Zudem wird es als nachteilig angesehen, dass insbesondere durch die einzelnen Bearbeitungsstationen - sei es das Kappsägen oder sei es das Bohren/Fräsen oder dergleichen - eine entsprechende Vorrichtungslänge vorgehalten werden muss, um auf diese Weise die entsprechenden Bearbeitungseinheiten an der Vorrichtung vorzusehen. Dies hat insbesondere den Nachteil, dass dann die Bearbeitungsstraße lang bauend auszulegen ist, um die entsprechenden Bearbeitungswerkzeuge hintereinander zu schalten.

### Darstellung der Erfindung

Der Erfindung liegt somit das Problem zugrunde, eine Vorrichtung zum Bearbeiten von stangenförmigen Werkstücken derart weiterzubilden, welche hinsichtlich der Bearbeitung des Werkstücks einerseits eine höhere Prozesssicherheit gewährleistet unter Bereitstellung einer schonenden Oberflächenbehandlung, wobei insbesondere auch die Bearbeitungszeit des Werkstücks wesentlich verkürzt werden soll. Zudem soll der Bearbeitungszugang des Bearbeitungswerkzeugs zu dem Werkstück auf der Transporteinrichtung wesentlich flexibler gehalten werden, wobei auch berücksichtigt werden soll, dass die Vorrichtung zur Bearbeitung von stangenförmigen Werkstücken wesentlich kürzer bauend ausfallen soll.

Erfindungsgemäß wird das Problem mit den Merkmalen des Hauptanspruchs gelöst, vorteilhafte Ausgestaltungen und Weiterbildungen der Erfindung ergeben sich aus den Unteransprüchen.

Die mit der Erfindung erreichten Vorteile bestehen darin, dass mit der erfindungsgemäßen Vorrichtung zum Bearbeiten der Zugang der Bearbeitungswerkzeuge in der senkrechten Ebene in Bezug zu dem transportierten Werkstück wesentlich flexibler gehalten werden, weil die Bearbeitungswerkzeuge auf einem offenen Kreisbogen angeordnet sind, der als geöffneter Ring ausgebildet ist. Aufgrund dieser Ausbildung ist es nun möglich, dass mit dem sogenannten offenen Kreisbogen eine quasi ringförmige Bearbeitungsstation geschaffen wird, die aufgrund der Verfahrbarkeit des offenen Kreisbogens so gefahren werden kann, dass die auf dem Kreisbogen vorhandenen Werkzeuge alle Bereiche um das stangenförmige Profil erreichen. Wird der offene Kreisbogen in eine Position gefahren, so besteht die Möglichkeit, dass in den offenen Bereich des Kreisbogens hier weitere Werkzeuge einfahren können, die für die Profilbearbeitung wesentlich sind. So können beispielsweise Kappsägen, Gehrungssägen oder eine mehr Achsen Säge eingefahren werden, die das Profil aufkürzen. Auch besteht die Möglichkeit, Fräsen, Bohrer oder andere Werkzeuge einzufahren, die nach dem Sägen hier insbesondere die stirnseitigen Bereiche des Profils bearbeiten können. Somit wird erreicht, dass neben der sogenannten Rundumbearbeitung um das Profil entsprechend auch eine Durchtrennung sowie eine Bearbeitung der Stirnseiten an einer lokalen Station vorgenommen werden können. Es ergibt sich nun der Vorteil, dass die Vorrichtung, oder hier die Straße zur Bearbeitung der stangenförmigen Profile, wesentlich kürzer gehalten werden kann, sodass die Anlage als solches wesentlich kompakter baut. Durch die kompakte Bauweise wird auch erreicht, dass dadurch Kosten bei einer derartigen Anlage eingespart werden können.

Mit der erfindungsgemäßen Lösung ist es möglich geworden, dass neben dem Einfahren des geöffneten Flachringes von der Seite her, also in der X-Richtung zum Werkstück auch die Vorzüge einer ringförmigen Bearbeitung am Werkstück gegeben sind, wobei dadurch auch ein allseitiger Zugang für die Bearbeitungswerkzeuge in einer Ebene geschaffen wurde. Denn infolge des geöffneten Abschnittes steht ein Freiraum für weitere Bearbeitungswerkzeuge zur Verfügung die in der Ebene des Flachringes Zugang zum Werkstück erlagen.

Die hohe Flexibilität und die Reduzierung der Bearbeitungszeit werden im Wesentlichen dadurch erreicht, dass die Bearbeitungseinrichtung aus einem in der senkrechten Ebene zum Werkstück angeordneten offenen Kreisbogen besteht, der als geöffneter Ring um das Werkstück gedreht gelagert ist, wobei der geöffnete Abschnitt des Rings derart bemessen ist, dass in der senkrechten Ebene der Bearbeitungseinrichtung gegenüberliegende Werkzeuge in den Bereich des geöffneten Abschnitts des Rings zur Bearbeitung des Werkstücks einfahrbar sind. Somit können nun in einer senkrechten Ebene zum Werkstück quasi alle Bearbeitungsvorgänge in einer Ebene vorgenommen werden.

Nach einer besonders vorteilhaften Ausbildung der Erfindung ist der geöffnete Ring als Flachring an einer Portalsäule angeordnet, die gegenüber einem Maschinenrahmen in X-Richtung verfahrbar ist. Hierbei ist der geöffnete Ring an der Portalsäule vertikal in der Y-Richtung verfahrbar. In Weiterbildung ist an der Portalsäule eine Halterung für den geöffneten Flachring angeordnet, an der der geöffnete Ring mit seiner Rückseite verdrehbar gelagert ist. Somit wird der offene Ring so an der Portalsäule vorgehalten, dass er einerseits in der Höhe in der Y-Richtung verfahrbar ist sowie in der X-Ebene, um auf diese Weise die Flexibilität des geöffneten Rings in Bezug zum zu bearbeitenden Werkstück bereitzustellen. Es besteht nun die Möglichkeit, dass durch den offenen Ring dieser quasi um das zu bearbeitende Werkstück gedreht werden kann, dass die an dem Ring vorhandenen Werkzeuge entsprechend ihre Zugänglichkeit zum Werkstück erhalten.

Nach einer besonders vorteilhaften Ausgestaltung ist an der Halterung, die einerseits an der Portalsäule mittels Führungen verfahrbar gehalten wird und andererseits einen über die Portalsäule ragenden Schenkelbereich aufweist, ist der geöffnete Flachring an der Führung für die Drehlagerung vorgesehen ist. An der Halterung wird hierbei der geöffnete Flachring geführt, sodass er gegenüber der Portalsäule verdreht werden kann. In Weiterbildung wirkt hierbei der geöffnete Ring zur Drehlagerung mit einem an der Halterung angeordneten Antrieb zusammen, der an der verfahrbaren Halterung befestigt ist. Der geöffnete Ring weist hierbei nach einer möglichen Ausführungsform eines Antriebs an seinem Umfang einen gespannten Riemen auf, der mit einem auf einer Motorachse angeordneten Antriebsrad des Antriebs zusammenwirkt. Denkbar sind aber auch andere Antriebe, wie Zahnradgetriebe, Schneckengetriebe, Linearmotor oder dergleichen um den Ring zu verdrehen. Um insbesondere eine sichere und flexible Drehlagerung des geöffneten Rings an der Halterung und hier in der Führung zu gewährleisten, sind jeweils vor und hinter dem Antriebsrad Umlenkrollen an der Halterung angeordnet, die den Riemen am Umfang des Rings führen und an die Umfangsfläche des Ringes drücken.

Nach einer besonders vorteilhaften Weiterbildung der Erfindung ist an dem geöffneten Ring an der Frontseite wenigstens ein verfahrbarer Schlitten ange-ordnet, an dem ein Motor sowie Bearbeitungswerkzeuge angeordnet sind. Hierbei sind an dem Umfang des geöffneten Rings Mittel zum Formschluss mit dem Motor vorgesehen. Somit wird sicher- und bereitgestellt, dass auf dem frontseitigen Bereich des geöffneten Flachrings die Bearbeitungswerkzeuge über den Umfang bzw. dem Bogenbereich des Rings verfahren werden können. In Weiterbildung ist ebenfalls vorgesehen, dass an dem geöffneten Ring an einem der freien Enden des Rings wenigstens ein fest am Ring montiertes Werkzeug angeordnet ist, welches radial zum Werkstück ausgerichtet ist. Aufgrund der Drehlagerung des geöffneten Rings sind die Werkzeuge in der Lage, zu jedem Punkt auf dem Werkstück gefahren zu werden, da insbesondere eine 360-Grad-Abdeckung hier gegeben ist.

Wie bereits schon oben erwähnt, ist in der Ebene des geöffneten Flachringes gegenüberliegend ein weiteres Bearbeitungswerkzeug an einer in der X-Richtung an einem Gestell verfahrbaren Portalsäule angeordnet. Das Bearbeitungswerkzeug ist an der zweiten Portalsäule ebenfalls in der Y-Richtung verfahrbar. Somit lässt sich das Bearbeitungswerkzeug in den Bereich einfahren, der von dem geöffneten Ring zugänglich gemacht wird, wenn dieser entsprechend verdreht wird, dass der geöffnete Abschnitt zur zweiten gegenüberliegenden Portalsäule weist. Das Bearbeitungswerkzeug als solches umfasst hierbei eine Säge, einen Fräser oder einen Bohrer, mit dem entsprechend eine Auflängung des Werkstücks oder eine Bearbeitung der stirnseitigen Enden erfolgen kann.

### Kurze Beschreibung der Zeichnungen

Ein Ausführungsbeispiel der Erfindung ist in den Zeichnungen rein schematisch dargestellt und wird nachfolgend näher beschrieben. Es zeigt:
Figur 1 eine perspektivische Darstellung der erfindungsgemäßen Vorrichtung zum Bearbeiten von stangenförmigen Werkstücken,
Figur 2 eine Frontansicht auf die Vorrichtung gemäß der Figur 1,
Figur 3 eine weitere Frontansicht in einer weiteren Stellung der Werkzeuge an der Vorrichtung gemäß der Figur 1,
Figur 4 eine weitere Frontansicht in einer weiteren Stellung der Werkzeuge der Vorrichtung in einer anderen Ansicht gemäß der Figur 1,
Figur 5 eine perspektivische Darstellung des geöffneten Rings an der Portalsäule und
Figur 6 eine perspektivische Detailansicht eines möglichen Antriebs für den geöffneten Ring sowie den Schlittenantrieb für das Bearbeitungswerkzeug.

### Ausführungsbeispiele

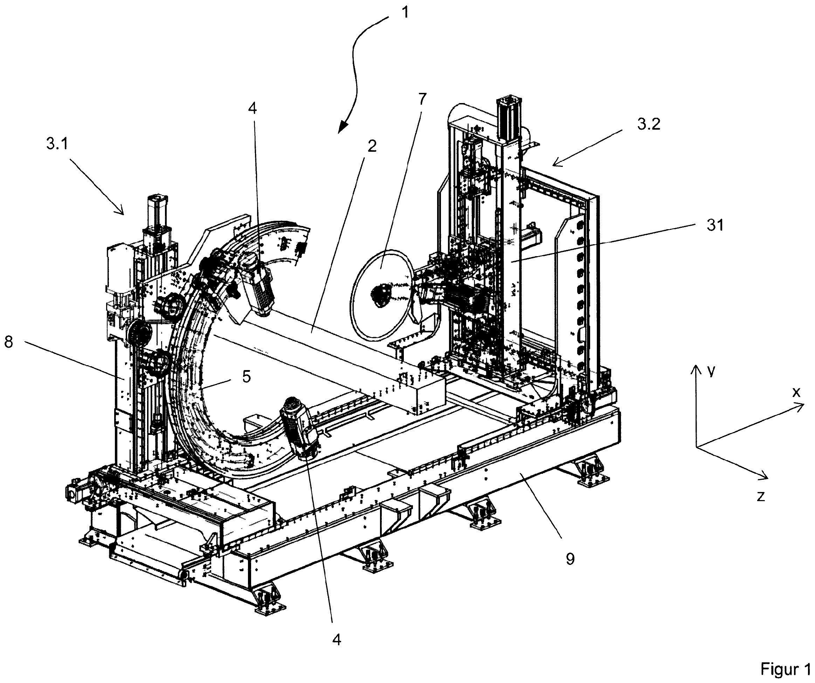

Die Figuren 1, 2 und 3 sowie die Figur 4 zeigen jeweils in Einzelansichten die erfindungsgemäße Vorrichtung 1 zum Bearbeiten von stangenförmigen Werkstücken 2, wie beispielsweise Fensterprofile oder Türprofile, die mittels einer nicht näher dargestellten Transporteinrichtung in einer horizontalen Ebene in Z-Richtung bewegbar sind. In einer im Wesentlichen senkrecht angeordneten Ebene - hier die Y-Ebene - zur Bewegungsrichtung der Werkstücke 2 ist eine Bearbeitungseinrichtung 3.1 und 3.2 mit Werkzeugen 4 vorgesehen ist, die in der senkrechten Ebene in Bezug zum Werkstück 2 räumlich ausgerichtet ist. Wie insbesondere aus den Figuren 1, 2, 3 und 4 zu erkennen ist, besteht die Bearbeitungseinrichtung 3.1 aus einem in der senkrechten Ebene zum Werkstück 2 angeordneten offenen Kreisbogen, der als geöffneter Flachring 5 um das Werkstück 2 in der Z-Achse drehbar gelagert ist, wobei die drehbare Lagerung durch die angedeuteten Pfeile verdeutlicht werden soll.

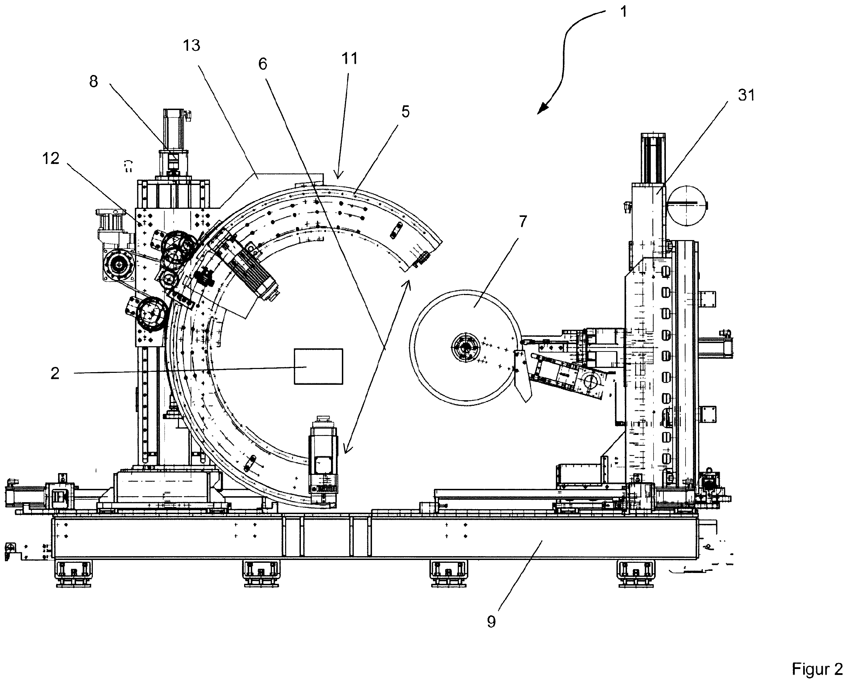

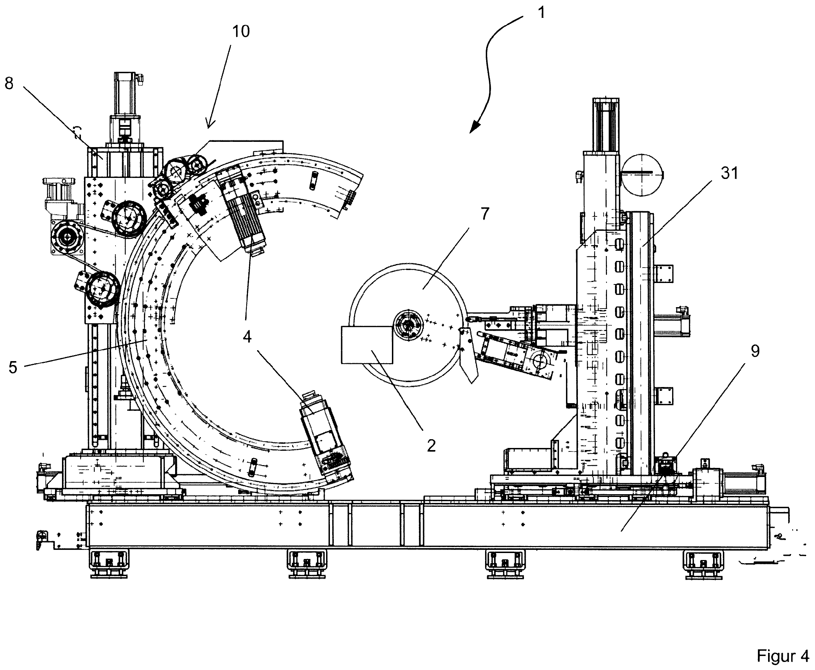

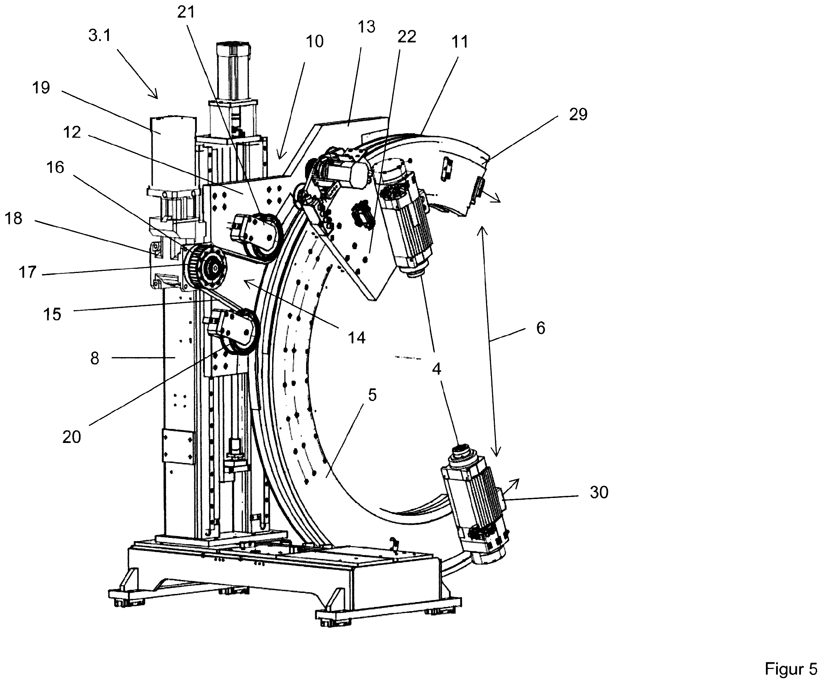

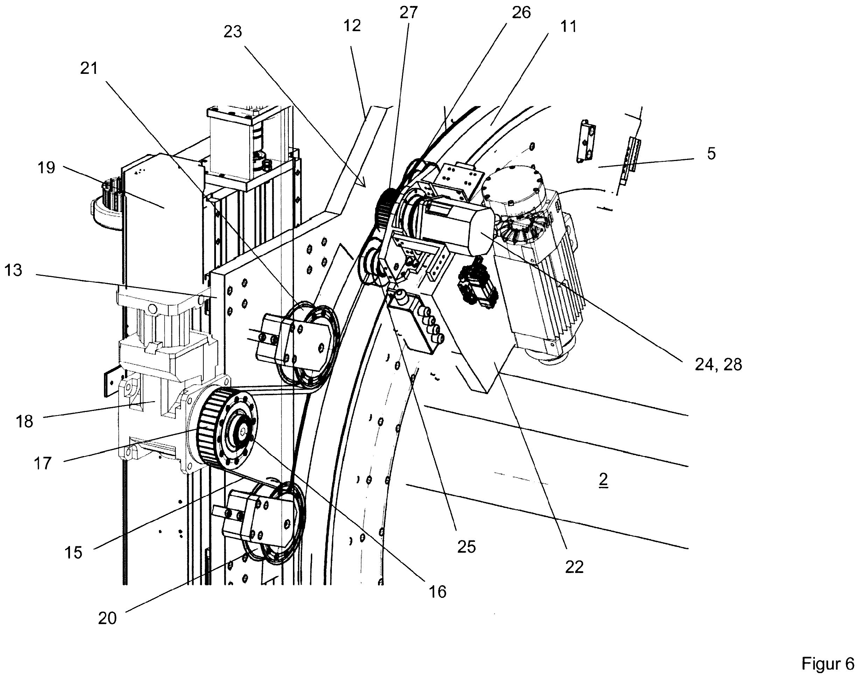

Dabei ist der geöffnete Flachring 5 derart mit einem geöffneten Abschnitt 6 bemessen, dass in der senkrechten Ebene der Bearbeitungseinrichtung 3.1 gegenüberliegende Werkzeuge 7 der Bearbeitungseinrichtung 3.2 in den Bereich des geöffneten Abschnitts 6 des Flachringes 5 zur Bearbeitung des Werkstücks 2 einfahrbar sind, wie dies insbesondere in der Figur 2, aber auch in der Figur 4 näher verdeutlicht wird. Wie insbesondere aus der Figur 1, aber auch aus der Figur 5 deutlich zu erkennen ist, ist der geöffnete Flachring 5 an einer Portalsäule 8 angeordnet, die gegenüber einem Maschinenrahmen 9 in X-Richtung verfahrbar ist. Der geöffnete Flachring 5 ist an der Portalsäule 8 vertikal in der Y-Richtung verfahrbar, sodass er einmal nach oben verfahren werden kann und auf das zu bearbeitende Werkstück 2. Aus der Zusammenschau der Figuren 1-4, aber auch in der Detailansicht der Figuren 4 und 6 ist erkennbar, dass an der Portalsäule 8 eine Halterung 10 für den geöffneten Flachring 5 angeordnet ist. Der geöffnete Ring 5 ist hierbei über seinen Umfang 11 an der Halterung 10 drehbar gelagert ist. Die Halterung 10 selbst ist mittels einer Führung an einem Bereich 12 an der Portalsäule 8 verfahrbar gelagert ist. An dem Bereich 12 der Halterung 10 fügt sich ein schenkelartiger Bereich 13 an, an dem eine Führung für die Drehlagerung des geöffneten Flachrings 5 vorgesehen ist, wie diese insbesondere angedeutet ist in der Figur 5. Somit ist insbesondere die Halterung 10 in der X- und Y-Achse an der Portalsäule 8 verfahrbar, wobei an der Halterung 10 insbesondere die Rückseite des geöffneten Flachrings 5 so gelagert ist, dass dieser an der Halterung 10 entsprechend gedreht werden kann.

Hierbei wirkt der geöffnete Flachring 5 zur Drehlagerung mit einem an der Halterung 10 angeordneten Antrieb 14 zusammen, wie dieser insbesondere in den Figuren 5 und 6 näher zu erkennen ist. Hierzu weist der geöffnete Ring 5 an seinem Umfang 11 einen gespannten Riemen 15 auf, der mit einem auf einer Motorachse 16 angeordneten Antriebsrad 17 zusammenwirkt, wie dies in der Figur 6 deutlich zu erkennen ist. Das Antriebsrad 17 ist hierbei über ein Getriebe 18 mit einem Motor 19 gekoppelt. Aus der Figur 6 ist weiter erkennbar, dass jeweils vor und hinter dem Antriebsrad 17 Umlenkrollen 20 und 21 an der Halterung 10 angeordnet sind, die den Riemen 15 am Umfang 11 des Flachringes 5 führen. Somit wird deutlich, dass bei Drehen des Antriebsrades 17 entsprechend der Riemen 15 hier einerseits vom Umfang 11 aufgenommen wird, wobei er dann nach Überlaufen des Antriebsrades 17 entsprechend wieder am Umfang 11 durch die dahinterliegende Umlenkrolle 20, 21 wieder abgelegt wird und hier an bzw. auf den Umfang 11 gepresst wird. Aufgrund dieses Antriebs 14 ergibt sich eine Drehbarkeit des geöffneten Flachringes 5 in der Führung an der Halterung 10. Der beschriebene Antrieb dokumentiert hier nur eine mögliche Ausführungsform. Denkbar sind als Antriebe auch Zahnradantreibe, Linearmotoren oder dergleichen für die Drehlagerung des Flachringes 5 zu verwenden.

Wie insbesondere aus den Figuren 5 und 6 weiter zu erkennen ist, ist an dem geöffneten Flachring 5 wenigstens ein verfahrbarer Schlitten 22 mit einem Motor 24 an der Frontseite angeordnet. Auf dem Schlitten 22 sind die Bearbeitungswerkzeuge 4 angeordnet, die radial zum Werkstück 2 ausgerichtet sind. Hierbei sind an dem Umfang 11 des geöffneten Flachringes 5 Mittel 23 zum Formschluss, wie beispielsweise ein Riemen, mit dem Motor 24 vorgesehen. Es versteht sich von selbst, dass entsprechend auch eine Verfahrbarkeit des Schlittens 22 entsprechend der beschriebenen Ausführungsform zum Verdrehen des geöffneten Flachringes 5 entsprechend am Schlitten 22 vorgesehen sein kann, wobei hier entsprechend auch Umlenkrollen 25 und 26 sowie ein Antriebsrad 27 und ein Motor 28 vorgesehen sein können, sodass über den Umfang 11 in dem vorderen Bereich der Schlitten 22 am geöffneten Flachring 5 hier verfahren werden kann. Somit ergibt sich insbesondere ein verfahrbares Werkzeug 4, was über das Bogenmaß des geöffneten Flachrings 5 verfahren werden kann.

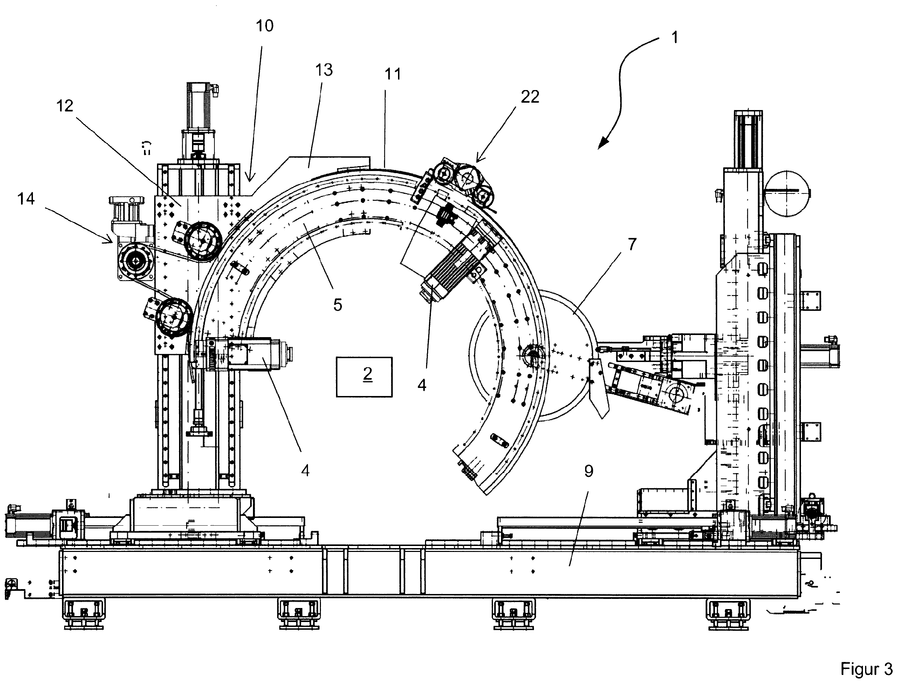

Nach einer besonderen Ausgestaltung ist an dem geöffneten Flachring 5 an einem der freien Enden 29, 30 des Flachrings 5 wenigstens ein fest am Flachring 5 montiertes Werkzeug 4 angeordnet, welches radial zum Werkstück 2 ausgerichtet ist, dies ist entsprechend zu erkennen in der Figur 5, aber auch in den Figuren 3, 4 sowie den Figuren 1 und 2. Die Festanordnung des Werkzeugs 4 erlaubt es, dass aufgrund der offenen Kreisform hier das fest angeordnete Werkzeug 4 in Kombination mit dem verfahrbaren Werkzeug 4 am Schlitten jede Position am zu bearbeitenden Werkstück 2 erreicht werden kann.

In der Zusammenschau der Figuren 1, 2, 3 und 4 ist deutlich zu erkennen, dass in der Ebene des geöffneten Flachrings 5 gegenüberliegend ein Bearbeitungswerkzeug 7 an der in der X-Richtung an dem Maschinenrahmen 9 verfahrbaren Portalsäule 31 angeordnet. Das Bearbeitungswerkzeug 7 an der Portalsäule 31 ist hierbei in der Y-Richtung ebenfalls verfahrbar, sodass es gegenüber dem zu bearbeitenden Werkstück 2 derart verfahren werden kann, dass es sowohl oberhalb als auch unterhalb eingreifen kann. Wie insbesondere in den Ausführungsbeispielen zu erkennen, handelt es sich hier bei dem Bearbeitungswerkzeug 7 um eine Säge, mit der insbesondere eine Auftrennung des stangenförmigen Werkstücks 2 vorgenommen werden kann, wie dies beispielsweise in der Figur 4 deutlich zu erkennen ist. Nicht dargestellt sind beispielsweise Fräser oder ein Bohrer, die dann von der gegenüberliegenden Position hier entsprechend die Stirnseiten der aufgetrennten Profile bearbeiten können.

### Bezugszeichenliste

- 1.: Vorrichtung
- 2.: Werkstück
- 3.: Bearbeitungseinrichtung 3.1, 3.2
- 4.: Werkzeug an 3.1
- 5.: Flachring
- 6.: Geöffneter Abschnitt
- 7.: Werkzeug an 3.2
- 8.: Portalsäule Flachring
- 9.: Maschinenrahmen
- 10.: Halterung
- 11.: Umfang
- 12.: Platte geführter Bereich
- 13.: Platte Schenkelbereich
- 14.: Antrieb
- 15.: Riemen
- 16.: Motorachse
- 17.: Antriebsrad
- 18.: Getriebe
- 19.: Motor
- 20.: Umlenkrolle
- 21.: Umlenkrolle
- 22.: Schlitten
- 23.: Mittel
- 24.: Motor Schlitten
- 25.: Umlenkrolle
- 26.: Umlenkrolle
- 27.: Antriebsrad
- 28.: Motor
- 29.: Freies Ende
- 30.: Freies Ende
- 31.: Portalsäule

## Patentansprüche

1. Vorrichtung (1) zum Bearbeiten von stangenförmigen Werkstücken (2) wie beispielweise Fensterprofilen oder Türprofilen, die mittels einer Transporteinrichtung in einer horizontalen Ebene in Z-Richtung bewegbar sind und wobei in einer im Wesentlichen senkrecht angeordneten Ebene zur Bewegungsrichtung der Werkstücke (2) eine Bearbeitungseinrichtung (3) mit Werkzeugen (4) vorgesehen ist, die in der senkrechten Ebene in Bezug zum Werkstück (2) räumlich ausgerichtet ist, wobei die Bearbeitungseinrichtung (3.1) aus einem in der senkrechten Ebene zum Werkstück (2) angeordneten offenen Kreisbogen besteht, der als geöffneter Flachring (5) mit einem geöffneten Abschnitt (6) um das Werkstück (2) drehbar gelagert ist,
**dadurch gekennzeichnet, dass**
an dem geöffneten Flachring (5) wenigstens ein verfahrbarer Schlitten (22) angeordnet ist, an dem ein Motor (24) sowie ein Werkzeug (4) angeordnet sind.

2. Vorrichtung nach Anspruch 1
**dadurch gekennzeichnet,**
**dass** der geöffnete Flachring (5) an einer Portalsäule (8) angeordnet ist, die an einem Maschinenrahmen (9) in X-Richtung verfahrbar ist.

3. Vorrichtung nach Anspruch 1 und 2
**dadurch gekennzeichnet,**
**dass** der geöffnete Flachring (5) an der Portalsäule (8) vertikal in der Y-Richtung verfahrbar ist.

4. Vorrichtung nach den Ansprüchen 1 bis 3,
**dadurch gekennzeichnet,**
**dass** an der Portalsäule (8) eine Halterung (10) für den geöffneten Flachring (5) angeordnet ist, an der der geöffnete Flachring (5) über bzw. an seinen Umfang (11) verdrehbar gelagert ist.

5. Vorrichtung nach den Ansprüchen 1 bis 4,
**dadurch gekennzeichnet,**
**dass** an der Halterung (10) eine Führung für die Drehlagerung des geöffneten Flachrings (5) vorgesehen ist.

6. Vorrichtung nach den Ansprüchen 1 bis 5,
**dadurch gekennzeichnet,**
**dass** der geöffnete Flachring (5) zur Drehlagerung mit einem an der Halterung (10) angeordneten Antrieb (14) zusammenwirkt.

7. Vorrichtung nach den Ansprüchen 1 bis 6,
**dadurch gekennzeichnet,**
**dass** der Antrieb (14) mit dem Umfang (11) des geöffneten Flachringes (5) zusammenwirkt.

8. Vorrichtung nach den Ansprüchen 1 bis 7,
**dadurch gekennzeichnet,**
**dass** an dem geöffneten Flachring (5) an einem der freien Enden (29, 30) des Rings wenigstens ein fest auf dem Flachring (5) montiertes Werkzeug (4) angeordnet ist, welches radial zum Werkstück (2) ausgerichtet ist.

9. Vorrichtung nach den Ansprüchen 1 bis 8,
**dadurch gekennzeichnet,**
**dass** der geöffnete Abschnitt (6) des Flachrings (5) derart bemessen ist, dass in der senkrechten Ebene der Bearbeitungseinrichtung (3.1) gegenüberliegende Werkzeuge (7) einer zweiten Bearbeitungseinrichtung (3.2) in den Bereich des geöffneten Abschnittes (6) des Rings (5) zur Bearbeitung des Werkstücks (2) einfahrbar sind.

10. Vorrichtung nach den Ansprüchen 1 bis 9,
**dadurch gekennzeichnet,**
**dass** das gegenüberliegend angeordnete Bearbeitungswerkzeug (7) an einer in der X-Richtung an dem Maschinenrahmen (9) verfahrbaren Portalsäule (31) angeordnet ist.

11. Vorrichtung nach den Ansprüchen 1 bis 10,
**dadurch gekennzeichnet,**
**dass** das Bearbeitungswerkzeug (7) an der Portalsäule (31) in der Y-Richtung verfahrbar ist.

12. Vorrichtung nach den Ansprüchen 1 bis 11,
**dadurch gekennzeichnet,**
**dass** das Bearbeitungswerkzeug (7) eine Säge, ein Fräser oder einen Bohrer umfasst.

## Claims

1. A device (1) for machining rod-shaped workpieces (2), for example window profiles or door profiles, which can be moved by means of a transporter in a horizontal plane in the Z-direction, and wherein a machining device (3) with tools (4) is provided in a plane arranged essentially perpendicular to the direction of movement of the workpieces (2), and spatially aligned in the perpendicular plane in relation to the workpiece (2), wherein the machining device (3.1) consists of an open circular arc arranged in the perpendicular plane to the workpiece (2), which as an open flat ring (5) with an open section (6) is rotatably mounted around the workpiece (2),
**characterized in that**
the open flat ring (5) has arranged on it at least one movable carriage (22), on which a carriage-driving motor (24) as well as a tool (4) are arranged.

2. The device according to claim 1,
**characterized in that**
the open flat ring (5) is arranged on a portal column (8) that can be moved on a machine frame (9) in the X-direction.

3. The device according to claim 1 and 2,
**characterized in that**
the open flat ring (5) can be vertically moved on the portal column (8) in the Y-direction.

4. The device according to claims 1 to 3,
**characterized in that**
a portal column (8) has arranged on it a bracket (10) for the open flat ring (5), on which the open flat ring (5) is twistably mounted over or on its circumference (11).

5. The device according to claims 1 to 4,
**characterized in that**
a guide is provided on the bracket (10) for rotatably mounting the open flat ring (5).

6. The device according to claims 1 to 5,
**characterized in that**
the open flat ring (5) interacts with a drive (14) arranged on the bracket (10) for rotational mounting purposes.

7. The device according to claims 1 to 6,
**characterized in that**
the drive (14) interacts with the circumference (11) of the open flat ring (5).

8. The device according to claims 1 to 7,
**characterized in that**
at least one tool (4) fixedly mounted on the flat ring (5) and aligned radially to the workpiece (2) is arranged on the open flat ring (5) at one of the free ends (29, 30) of the ring.

9. The device according to claims 1 to 8,
**characterized in that**
the open section (6) of the flat ring (5) is dimensioned in such a way that tools (7) of a second machining device (3.2) lying opposite each other in the perpendicular plane of the machining device (3.1) can be retracted into the area of the open section (6) of the ring (5) for machining the workpiece (2).

10. The device according to claims 1 to 9,
**characterized in that**
the machine tool (7) lying opposite is arranged on a portal column (31) that can be moved in the X-direction on the machine frame (9).

11. The device according to claims 1 to 10,
**characterized in that**
the machine tool (7) can be moved on the portal column (31) in the Y-direction.

12. The device according to claims 1 to 11,
**characterized in that**
the machine tool (7) comprises a saw, a cutter, or a drill.

## Revendications

1. Dispositif (1), destiné à usiner des pièces à usiner (2) en forme de barres, comme par exemple des profilés de fenêtres ou des profilés de portes, qui sont mobiles au moyen d'un système de transport dans un plan horizontal dans la direction Z, et dans un plan placé sensiblement à la perpendiculaire de la direction de déplacement des pièces à usiner (2) étant prévu un système d'usinage (3) avec des outils (4), qui est physiquement orienté dans le plan perpendiculaire par rapport à la pièce à usiner (2), le système d'usinage (3.1) étant constitué d'un arc de cercle ouvert placé dans le plan perpendiculaire par rapport à la pièce à usiner (2), qui en tant que bague plate (5) ouverte est logé par une partie ouverte (6) en étant rotative autour de la pièce à usiner (2),
**caractérisé en ce que**
sur la bague plate (5) ouverte est placé au moins un chariot (22) déplaçable sur lequel sont placés un moteur (24) destiné à entraîner le chariot, ainsi qu'un outil (4).

2. Dispositif selon la revendication 1,
**caractérisé en ce que**
la bague plate (5) ouverte est placée sur une colonne de portique (8), qui est déplaçable dans la direction X sur un châssis de machine (9).

3. Dispositif selon la revendication 1 et 2
**caractérisé en ce que**
la bague plate (5) ouverte est déplaçable à la verticale dans la direction Y sur la colonne de portique (8).

4. Dispositif selon les revendications 1 à 3,
**caractérisé en ce que**
sur la colonne de portique (8) est placée une fixation (10) pour la bague plate (5) ouverte, sur laquelle la bague plate (5) est logée en étant susceptible de tourner par l'intermédiaire de ou sur sa périphérie (11).

5. Dispositif selon les revendications 1 à 4,
**caractérisé en ce que**
sur la fixation (10) est prévu un guidage pour le logement en rotation de la bague plate (5) ouverte.

6. Dispositif selon les revendications 1 à 5,
**caractérisé en ce que**
pour le logement en rotation, la bague plate (5) coopère avec un entraînement (14) placé sur la fixation (10).

7. Dispositif selon les revendications 1 à 6,
**caractérisé en ce que**
l'entraînement (14) coopère avec la périphérie (11) de la bague plate (5) ouverte.

8. Dispositif selon les revendications 1 à 7,
**caractérisé en ce que**
sur la bague plate (5) ouverte, sur l'une des extrémités libres (29, 30) de la bague est placé au moins un outil (4) monté de manière fixe sur la bague plate (5), lequel est orienté en direction radiale par rapport à la pièce à usiner (2).

9. Dispositif selon les revendications 1 à 8,
**caractérisé en ce que**
la partie ouverte (6) de la bague plate (5) est dimensionnée de telle sorte que des outils (7) placés en vis-à-vis dans le plan perpendiculaire du système d'usinage (3.1) d'un deuxième système d'usinage (3.2) puissent s'introduire dans la zone de la partie ouverte (6) de la bague (5) pour l'usinage de la pièce à usiner (2).

10. Dispositif selon les revendications 1 à 9,
**caractérisé en ce que**
l'outil d'usinage (7) placé en vis-à-vis est placé sur une colonne de portique (31) déplaçable dans la direction X sur le châssis de machine (9).

11. Dispositif selon les revendications 1 à 10,
**caractérisé en ce que**
l'outil d'usinage (7) est déplaçable dans la direction Y sur la colonne de portique (31).

12. Dispositif selon les revendications 1 à 11,
**caractérisé en ce que**
l'outil d'usinage (7) comprend une scie, une fraiseuse ou une perceuse.
